Europäisches Patentamt

European Patent Office

Office européen des brevets

(19)

(11) **EP 0 653 886 B1**

(12) **EUROPEAN PATENT SPECIFICATION**

(45) Date of publication and mention
of the grant of the patent:
**15.12.1999 Bulletin 1999/50**

(51) Int Cl.⁶: **H04N 7/173**

(21) Application number: **93870218.0**

(22) Date of filing: **17.11.1993**

(54) **Video on demand network**

Netzwerk für Video auf Anfrage

Réseau pour vidéo à la demande

(84) Designated Contracting States:
**BE DE ES FR GB IT NL SE**

(43) Date of publication of application:
**17.05.1995 Bulletin 1995/20**

(73) Proprietor: **ALCATEL**
**75008 Paris (FR)**

(72) Inventors:
• **Verhille, Henri Albert Julia**
**B-2960 Brecht (BE)**
• **Deloddere, Daniel**
**B-9150 Bazel (BE)**

(74) Representative:
**Narmon, Gisèle Marie Thérèse et al**
**Alcatel Bell N.V.**
**Intellectual Property Department**
**Francis Wellesplein 1**
**2018 Antwerpen (BE)**

(56) References cited:
**EP-A- 0 355 697**        **EP-A- 0 529 864**
**EP-A- 0 544 975**        **WO-A-92/11713**
**US-A- 4 506 387**        **US-A- 5 133 079**

• **COMPUTER NETWORKS AND ISDN SYSTEMS
vol. 22, no. 2 , 1991 , NETHERLANDS pages 155
- 162 XP225399 W.D. SINCOSKIE 'SYSTEM
ARCHITECTURE FOR A LARGE SCALE VIDEO
ON DEMAND SERVICE'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a video on demand network including a video server able to transmit a plurality of mutually delayed instances of a video signal stored therein, and a plurality of user stations coupled to said video server and able to transmit to said video server a request signal to request for the transmission of a said instance to said requesting user station, said video server starting transmission of said requested instance after a predetermined waiting time has elapsed since the receipt of said request signal.

Such a video on demand network is already known in the art, e.g. from the article "System architecture for a large scale video on demand service", by W. Sincoskie, Computer Networks and ISDN Systems 22, 1991, pp. 155-162. In the latter article the instances are referred to as phases and are transmitted with a constant inter-instance delay which is the maximum time the user station has to wait before receiving a new instance after it has issued a request signal. Thus the average waiting time is equal to half this inter-instance delay and decreases with decreasing inter-instance delay. On the other hand, this inter-instance delay also determines the bandwidth to be provided and allocated to the video signal in the network in order to allow all instances to be transmitted simultaneously, this bandwidth increasing with a decreasing inter-instance delay. For instance, when a video signal represents 100 minutes of normal display time at a rate of 2 Mbit/s, and when the inter-instance delay is 5 minutes, then a bandwidth of 20 x 2 or 40 Mbit/s has to be allocated to this video signal in order to be able to transmit all 20 instances thereof.

An object of the present invention is to provide a video on demand network of the above known type, but which while making use of at most the same bandwidth allows the average of said waiting time to be reduced for predetermined values or value ranges of said number.

According to the invention, this object is achieved by the subject-matter claimed in claim 1 due to the fact that said video server determines said waiting time in function of the number of instances which are in the course of being transmitted at the receipt of said request signal.

The invention is based on the insight that by determining the waiting time in function of the traffic conditions, i.e. of the above number, this waiting time may under certain circumstances, e.g. of low traffic, on the average be smaller than when determined in the way of the prior art, i.e. independently of the traffic conditions.

Another characteristic feature of the present invention is that said video server uses a mathematical function specifying said waiting time versus said number to determine said waiting time, the shape of said function being dependent on the frequency with which said video signal is requested by said user stations.

Thus, for a video signal representing a popular movie for which a lot of instances have to be transmitted, the function may be chosen in such a way that the mean and/or the maximum waiting time is lower than for another video signal representing a less popular movie, whereby the bandwidth which must be allocated to the popular movie video signal is higher than that allocated to the less popular movie video signal. These waiting times and corresponding allocated bandwidths may then be chosen such that the total required bandwidth is constant.

A further feature of the present invention is that said waiting time is also function of the total number of instances of said different video signals which are already being provided.

Thereby, the amount of available bandwidth is taken into account for determining the waiting time, since the total number of instances already being provided determines the total amount of used bandwidth and thus also the amount of still available bandwidth.

Another important characteristic of the present invention is that said video server additionally produces delayed instances of said video signal with a predetermined inter-instance delay.

Thereby, a video on demand service as already known in the art is also provided by the network, e.g. a full interactive video on demand service as described for instance in the published European patent application with publication number 0653884.

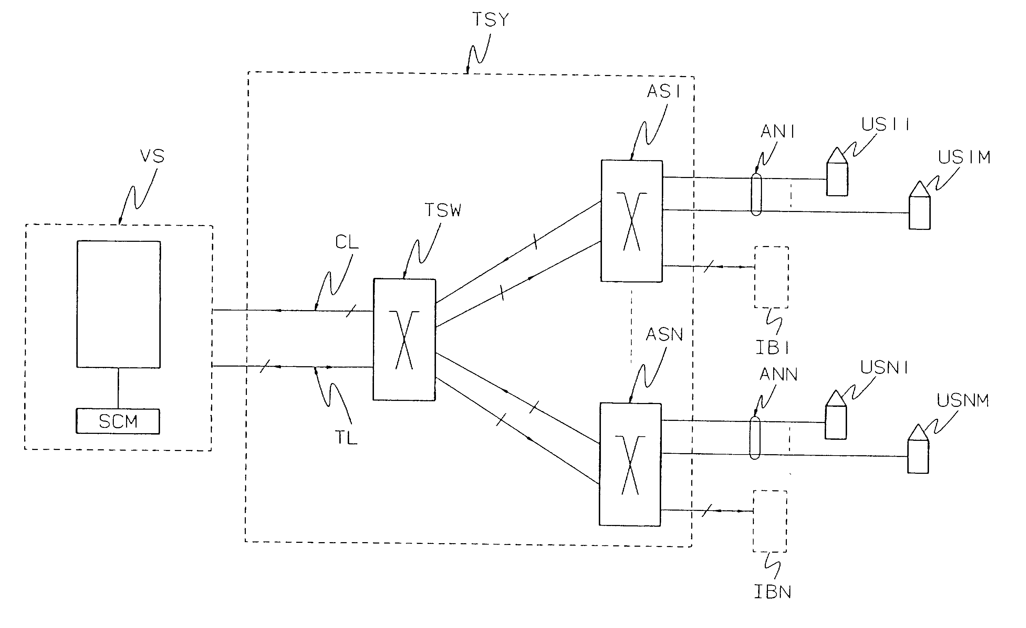

The above mentioned and other objects and features of the invention will become more apparent and the invention itself will be best understood by referring to the following description of an embodiment taken in conjunction with the accompanying drawing which represents a video on demand network according to the present invention.

The video on demand network shown in the figure includes a communication system TSY used to transfer versions of video signals from a video server VS, wherein these video signals are stored in read/write random access memories, to terminals of this communication system TSY, these terminals being connected to buffer arrangements IB1,.., IBN or to user stations US11,.., USNM.

The general operation principles of such a video on demand network with regard to the direct transfer of video signal versions, i.e. directly from the video server VS to the user stations US11, .., USNM, are described in the grantedEuropean patent applications with patent numbers 0625856 and 0625857, the present video server having to be regarded as a distributed video server in the sense of the latter applications. The general operation principles of the indirect transfer of video signal versions, i.e. via one of the buffers IB1, .., IBN and only thence to the user stations US11,.., USNM, are described in the above mentioned European patent application entitled 'Interactive video on demand network' with publication number 0653884. The video server VS and its operation principles are described in the European Patent application entitled 'Video server' with publication number 0653885. These general operation principles and the video server and its operation principles are therefore not discussed in detail here and the above pending applications are incorporated herein by reference.

Presently only the general architecture of the network is described to indicate in which general way the video signals are transferred from the video server VS to the terminals.

In the following, a video signal as stored in the video server VS is simply referred to as a video signal, whereas a video signal as transferred to a user station is referred to as a video signal version or an instance, i. e. of a same video signal a plurality of versions or instances may be supplied.

The communications system TSY includes a trunk switch TSW having a first set of ports which are connected to ports of the video server VS through trunk lines TL, video signal versions being retrieved from VS and being stored in VS via TL, and a further port connected to an interactive control port of the video server VS through a control line CL, interactive control signals being transmitted to VS via CL. TSW is furthermore coupled to access switches AS1 to ASN, via bidirectional trunk lines and via control lines. The bidirectional lines are used to transfer video signals whilst the interactive control signals are transferred to TSW over the control lines. The access switches AS1 to ASN are coupled to the user stations US11,.., US1M to USN1, .., USNM via access lines AN1 to ANN respectively. These access lines are used to transfer video signals as well as interactive control signals in the way described in the above first mentioned European patent specification No. 0 625 856. The access switches AS1 to ASN are furthermore connected to the buffers IB1 to IBN in the way described in the above mentioned co-pending patent application, publication No. 0 653 884.

It is to be noted that TSW can be coupled to AS1 to ASN via intermediate switches or so-called cross-connects and that AS1 to ASN con be coupled to the user stations via access networks.

It is to be also noted that the communications system TSY may be any communication system able to carry video signals at least at real time speed on any switching protocol, e.g. the Asynchronous Transfer Mode (ATM), the Synchronous Digital Hierarchy (SDH) or the Synchronous Optical Network (SONET) protocol, or may be any mix of Broadband Integrated Services Digital Network (B-ISDN) transport and switching systems. Likewise, the access networks AN1 to ANN may for instance be Asynchronous Passive Optical Networks (APON) as described in the granted European patent application with patent number 0544975 "Asynchronous Digital Subscriber Loop (ADSL) access networks, or other arrangements."

The operation of the video on demand network is now described with reference to the figure and using a function WT(CH) according to which the video server determines the time it waits, after receipt of a request signal from a user station for a video signal instance, before transmitting this requested instance. CH represents the number of instances already being transmitted at the moment the request signal is received from the user station.

When no instance of a specific video signal is being transmitted by VS to the requesting user station, e.g. US11, i.e. CH = 0, then such an instance may be transmitted after a waiting time WT(0) which usually equals 0, i.e. the user station will shortly after its request be able to display the requested instance. When thereafter and before the transmission of the last mentioned instance has stopped another user station, e.g. US12, requests for the transmission of an instance of the same video signal, the video server waits for a time interval equal to WT(1). This time interval is no longer zero but for instance 10 seconds and a new instance of the video signal is thus transmitted to US12 only after 10 seconds. When within these 10 seconds request signals from other user stations for an instance of the same video signal are received by VS, a copy of this same new instance is transmitted to them. Likewise, when a user station, e. g. US13, thereafter asks for an instance of the same video signal and when the transmission of both the first and the second instances is not yet finished, the server waits during a time WT(2) before transmitting a new instance of the video signal.

In a worst case condition the request signal issued by a user station for the transmission of a new instance of the video signal is received by the server immediately after the latter has just started the transmission of such an instance. In that case and when the number of instances which can be transmitted is equal to N, these N instances are being supplied after a waiting time equal to :

$$\sum_{CH=0}^{N-1} WT(CH)$$

Thus, for a video signal with a length corresponding to a display time LE, and in order to avoid that the video server receiving from a user station a request for transmission of an instance of the video signal when the N instances are already being transmitted, has to wait for a time longer than the maximum waiting time called MWT, the following equation has to be met :

$$\sum_{CH=0}^{N-1} WT(CH) + MWT > LE + WT(0)$$

For the function WT(CH) MWT is equal to WT(N-1).

In the above worst case condition the mean time the video server has to wait before transmitting an instance signal is equal to :

$$\frac{1}{2N} \sum_{CH=0}^{N-1} WT(CH)$$

However, when the worst case condition persists because new instances of the video signal are requested for each time a previous instance has just been transmitted, then the maximum time the server has to wait before transmission of a new instance, and consequently the time a user station has to wait to display that instance will eventually become equal to LE/N, whereby the mean waiting time becomes equal to LE/2N, which is the same as when the instances of the video signal are supplied with constant inter-instance delays.

Usually a user station does not always ask for a new instance immediately after a previous instance has been provided, but only some time later. In that case, not all N instances will have been transmitted when the transmission of the first instance is stopped. As a consequence, the mean waiting is less than in the above worst case condition and is equal to

$$\frac{1}{2X} \sum_{CH=0}^{X-1} WT(CH) \quad ,$$

where X is the number of instances actually being transmitted.

It is to be noted that in determining the function WT(CH) the popularity of the movie transmitted by means of the video signal can be taken into account for instance in such a way that the mean waiting time is lower for a popular movie than for a less popular one. However these waiting time have to be correlated to take into account the available bandwidth. In the same way the total number of instances related to all video signals being provided can be taken into account thereby taking into account the still available bandwidth.

It is also to be noted that a video server network as the one described above can also be adapted to provide video services as described in the mentioned patent specifications of even date by additionally providing video signal instances mutually delayed over constant inter-instance delays.

**Claims**

1. Video on demand network including a video server (VS) and a plurality of user stations (US11,..., USNM) coupled to said video server (VS), said video server (VS) is included to transmit a plurality of mutually delayed instances of a video signal stored therein, each one of said plurality of instances being a transmission version of said video signal, each one of said plurality of user stations (US11, ..., USNM) is included to transmit to said video server a request signal to request for starting transmission of one of said plurality of instances to said requesting user station, said video server (VS) starting transmission of said one instance after a predetermined waiting time (WT) has elapsed since the receipt of said request signal, **characterized** in that said video server (VS) determines said waiting time (WT) in function of a number of said plurality of instances which are in the course of being transmitted upon receipt of a said request signal in such a way that when said plurality of instances, which are in the course of being transmitted upon receipt of said request signal, increases, said waiting time (WT) correspondingly gradually increases up to a maximum waiting time (MWT).

2. Video on demand network according to claim 1, characterized in that said video server (VS) uses a mathematical function specifying said waiting time (WT) versus said number to determine said waiting time and operates in such a manner that when within a waiting time for transmitting said one instance upon receiving of said request signal of said requesting user station, also another request signal from another user station is received by the video server (VS), a copy of this same one instance is also transmitted to said other user station.

3. Video on demand network according to claim 2, characterized in that the shape of said function is dependent on the frequency with which for said video signal is requested by said user stations (US11,..., USNM) such that in the event when said video signal represents a popular movie a mean waiting time of said waiting time (WT) is lower than in the event when said video signal represents a less popular movie.

4. Video on demand network according to claim 1, characterized in that said waiting time is also a function of the total number of instances related to all different video signals and which are actually being transmitted.

5. Video on demand network according to claim 1, characterized in that said video server additionally produces delayed instances of said video signal with a predetermined constant inter-instance delay.

**Patentansprüche**

1. Netzwerk für Video auf Anfrage, enthaltend einen Videoserver (VS) und eine Mehrzahl von Benutzerstationen (US11,...,USNM), die mit dem Videoserver (VS) verbunden sind, wobei der Videoserver (VS) enthalten ist, um eine Mehrzahl von gegenseitig verzögerten Ereignissen eines darin gespeicherten Videosignals zu übertragen, wobei jedes der Mehrzahl von Ereignissen eine Übertragungsversion des Videosignals ist, jede der Mehrzahl von Benutzerstationen (US11,...,USNM) enthalten ist, um ein Anforderungssignal zu dem Videoserver zu übertragen, um das Starten einer Übertragung von einem der Mehrzahl von Ereignissen zu der anfordernden Benutzerstation anzufordern, wobei der Videoserver (VS) die Übertragung des einen Ereignisses beginnt, nachdem eine vorbestimmte Wartezeit (WT) seit dem Empfang des Anforderungssignals verstrichen ist, dadurch gekennzeichnet, daß der Videoserver (VS) die Wartezeit (WT) in Abhängigkeit von einer Anzahl der Mehrzahl von Ereignissen festlegt, die bei Empfang eines Anforderungssignals gerade übertragen werden, und zwar auf eine solche Weise, daß, wenn die Mehrzahl von Ereignissen, die bei Empfang des Anforderungssignals gerade übertragen werden, ansteigt, die Wartezeit (WT) entsprechend allmählich bis zu einer maximalen Wartezeit (MWT) ansteigt.

2.  Netzwerk für Video auf Anfrage nach Anspruch 1, dadurch gekennzeichnet, daß der Videoserver (VS) eine mathematische Funktion verwendet, die die Wartezeit (WT) in Abhängigkeit von der Anzahl angibt, um die Wartezeit festzulegen, und auf eine derartige Weise arbeitet, daß, wenn innerhalb einer Wartezeit zum Übertragen des einen Ereignisses nach dem Empfang des Anforderungssignals von der anfordernden Benutzerstation auch ein anderes Anforderungssignal von einer anderen Benutzerstation vom Videoserver (VS) empfangen wird, eine Kopie dieses selben einen Ereignisses auch zu der anderen Benutzerstation übertragen wird.

3.  Netzwerk für Video auf Anfrage nach Anspruch 2, dadurch gekennzeichnet, daß die Form der Funktion von der Frequenz abhängt, mit der das Videosignal von den Benutzerstationen (US11,...,USNM) angefordert wird, so daß in dem Fall, wenn das Videosignal einen populären Film darstellt, eine mittlere Wartezeit der Wartezeit (WT) kürzer ist als in dem Fall, wenn das Videosignal einen weniger populären Film darstellt.

4.  Netzwerk für Video auf Anfrage nach Anspruch 1, dadurch gekennzeichnet, daß die Wartezeit auch eine Funktion von der Gesamtanzahl von Ereignissen ist, die mit allen verschiedenen Videosignalen verknüpft sind und die augenblicklich übertragen werden.

5.  Netzwerk für Video auf Anfrage nach Anspruch 1, dadurch gekennzeichnet, daß der Videoserver zusätzlich verzögerte Ereignisse des Videosignals mit einer vorbestimmten konstanten Inter-Ereignis-Verzögerungszeit erzeugt.

## Revendications

1.  Réseau pour vidéo à la demande comprenant un serveur de vidéo (VS) et une pluralité de stations d'utilisateurs (US11, ..., USNM) couplées audit serveur de vidéo (VS), ledit serveur de vidéo (VS) est inclus pour transmettre une pluralité d'occurrences mutuellement retardées d'un signal vidéo qui y est mémorisé, chacune de ladite pluralité d'occurrences étant une version de transmission dudit signal vidéo, chacune de ladite pluralité de stations d'utilisateurs (US11, ..., USNM) est incluse pour transmettre, audit serveur de vidéo, un signal de demande pour demander le démarrage de la transmission d'une de ladite pluralité d'occurrences vers ladite station d'utilisateur demandeuse, ledit serveur de vidéo (VS) commençant la transmission de la susdite occurrence après qu'un temps d'attente prédéterminé WT s'est écoulé depuis la réception dudit signal de demande, caractérisé en ce que ledit serveur de vidéo (VS) détermine ledit temps d'attente (WT) en fonction d'un nombre de ladite pluralité d'occurrences qui sont en cours de transmission lors de la réception d'un dit signal de demande d'une manière telle que lorsque le nombre de ladite pluralité d'occurrences, qui sont en cours de transmission lors de la réception dudit signal de demande, augmente, ledit temps d'attente (WT) augmente proportionnellement et progressivement jusqu'à un temps d'attente maximal (MWT).

2.  Réseau pour vidéo à la demande selon la revendication 1, caractérisé en ce que ledit serveur de vidéo (VS) utilise une fonction mathématique spécifiant ledit temps d'attente (WT) en fonction dudit nombre pour déterminer ledit temps d'attente et fonctionne d'une manière telle que, lorsque dans un temps d'attente pour transmettre la susdite occurrence lors de la réception dudit signal de demande de ladite station d'utilisateur demandeuse, un autre signal de demande provenant d'une autre station d'utilisateur est également reçu par le serveur de vidéo (VS), une copie de la susdite occurrence est également transmise vers ladite autre station d'utilisateur.

3.  Réseau pour vidéo à la demande selon la revendication 2, caractérisé en ce que la forme de ladite fonction dépend de la fréquence à laquelle ledit signal vidéo est demandé par lesdites stations d'utilisateurs (US11, ..., USNM) de sorte que, dans le cas où ledit signal vidéo représente un film populaire, un temps d'attente moyen dudit temps d'attente (WT) est inférieur à celui du cas où ledit signal vidéo représente un film moins populaire.

4. Réseau pour vidéo à la demande selon la revendication 1, caractérisé en ce que ledit temps d'attente est également une fonction du nombre total d'occurrences en rapport avec l'ensemble des différents signaux vidéo et qui sont réellement en cours de transmission.

5. Réseau pour vidéo à la demande selon la revendication 1, caractérisé en ce que ledit serveur de vidéo produit, en outre, des occurrences retardées dudit signal vidéo avec un retard constant prédéterminé entre les occurrences.